# EUROPÄISCHE PATENTANMELDUNG

(11) **EP 1 761 085 A1**
(43) Veröffentlichungstag der Anmeldung: **07.03.2007**
(21) Anmeldenummer: 05019016.4
(22) Anmeldetag: 01.09.2005
(51) Int. Cl.: H04Q 7/32, H04L 12/56

(54) **Verfahren zum Rekonfigurieren einer Kommunikationseinrichtung eines Kommunikationssystems**

(71) Anmelder: SIEMENS AKTIENGESELLSCHAFT, 80333 München (DE)
(72) Erfinder: Dillinger, Markus, 81737 München (DE); Falk, Rainer, Dr., 85586 Poing (DE); Schulz, Egon, Dr., 80993 München (DE)

(57) **Zusammenfassung**

Bei dem erfindungsgemäßen Verfahren zum Rekonfigurieren einer Kommunikationseinrichtung eines Kommunikationssystems wird von einem der Kommunikationseinrichtung zugeordneten Rekonfigurationsmanager eine neue Konfiguration der Kommunikationseinrichtung definiert, wobei für die neue Konfiguration zumindest ein Software-Modul verwendet wird. Weiterhin wird von einer Registrierungseinrichtung ein Zertifikat für die definierte neue Konfiguration generiert, und nach einer Prüfung des Zertifikats die Kommunikationseinrichtung mittels des zumindest einen Software-Moduls rekonfiguriert.

## Beschreibung

Die Erfindung betrifft ein Verfahren, eine Kommunikationseinrichtung sowie ein System zum Rekonfigurieren einer Kommunikationseinrichtung eines Kommunikationssystems mittels zumindest eines Software-Moduls.

Aktuelle und zukünftige Funkstandards, beispielsweise GSM, UMTS, WLAN etc., einschließlich unter diesen Bezeichnungen subsummierte verschiedene Modi, erfordern unterschiedliche und speziell auf den jeweiligen Standard angepasste Sende/Empfangseinrichtungen, sowohl seitens des Endgerätes als auch des Netzzugangs. So ist beispielsweise eine Basisstation oder auch ein Teilnehmer-Endgerät eines Mobilfunksystems nach dem GSM-Standard (Global System for Mobile Communications) nicht in der Lage, auch Signale gemäß dem UMTS-Standard (Universal Mobile Telecommunications System) auszusenden oder zu empfangen. Anpassungen an die jeweiligen Funkschnittstellenspezifischen Parameter, beispielsweise Frequenzbänder, Modulation, Spreizung etc., erfolgen derzeit hauptsächlich mittels individueller Anpassungen von Hardware-Schaltungen oder -Bauteilen. Derartige rein hardwarebasierte Anpassungen sind jedoch nachteilig mit hohen Kosten sowie einer geringen Flexibilität verbunden.

Aus diesen Gründen wird seit geraumer Zeit angestrebt, rein Software-basierte Implementierungen verschiedener Standards zu ermöglichen, d.h. mittels Software-Modulen eine Anpassung von Parametern an unterschiedliche Funkstandards zu ermöglichen. Derartige mittels Software konfigurierbare Funkstationen werden allgemein als Software Defined Radio (SDR) bezeichnet.

In diesem Zusammenhang ist es beispielsweise auch möglich, dass die für eine Konfiguration der Funkstationen verwendeten Software-Module von unterschiedlichen Herstellern bzw. Systembetreibern stammen. Dabei kann der Fall auftreten, dass bestimmte Software-Module zu fehlerhaften Konfigurationen von Funkstationen führen, beispielsweise indem von einem Modul eine permanent zu hohe Sendeleistung eingestellt wird. Insbesondere in CDMA-basierten Mobilfunksystemen wie UMTS würde dies jedoch zu deutlichen Beeinträchtigungen der Übertragungsqualität anderer Teilnehmer führen, sodass der Betreiber des Mobilfunksystems diesem entgegen wirken muss.

Nach den aktuell bekannten Verfahren bzw. Ansätzen zu softwarebasierten Rekonfigurationen steht es jedem Teilnehmer frei, Rekonfigurationen seines Endgerätes autonom und nach aktuellem Bedarf durchzuführen. Dies kann jedoch nachteilig zu der Situation führen, dass einem Systembetreiber der Auslöser eines Fehlverhaltens in der Regel nicht bekannt ist, da verschiedenste Dinge, beispielsweise eine Inkompatibilität des Endgerätes mit dem speziellen Software-Modul, eine fehlerhafte Programmierung des Software-Moduls oder auch Viren, Auslöser für ein derartiges Fehlverhalten einer Funkstation sein können. Er kann lediglich feststellen, dass ein Fehlverhalten auftritt, und dies notfalls durch ein vollständiges Abschalten der Funkstation unterbinden.

Aufgabe der Erfindung ist es, ein Verfahren anzugeben, welches eine gesicherte und nachvollziehbare Rekonfiguration von Kommunikationseinrichtungen, insbesondere Funkstationen eines Mobilfunksystems, ermöglicht.

Diese Aufgabe wird gelöst durch das Verfahren, die Kommunikationseinrichtung sowie das System mit den Merkmalen der unabhängigen Patentansprüche. Vorteilhafte Weiterbildungen der Erfindung sind den jeweiligen abhängigen Patentansprüchen entnehmbar.

Erfindungsgemäß wird von einem einer Kommunikationseinrichtung zugeordneten Rekonfigurationsmanager eine im Vergleich zu einer aktuellen Konfiguration der Kommunikationseinrichtung geänderte Konfiguration definiert, wobei eine Änderung der Konfiguration mittels zumindest eines Software-Moduls erfolgen soll. Die definierte Konfiguration wird ausschließlich von einer Registrierungseinrichtung zertifiziert, sodass nach einer Prüfung des Zertifikats eine Rekonfiguration der Kommunikationseinrichtung mittels des zumindest einen Software-Moduls durchgeführt werden kann. Das Zertifikat wird beispielsweise nach einer Prüfung der Funktionsfähigkeit der neuen Konfiguration durch die Registrierungseinrichtung ausgestellt.

Vorteilhaft wird durch die Registrierungseinrichtung ermöglicht, dass entgegen den bekannten Verfahren, bei denen ein Software-Modul ausschließlich von dem Hersteller des Moduls zertifiziert wird, Software-Module unterschiedlicher Quellen in einer zentralen Instanz zertifizierbar sind, und damit die jeweilige Konfiguration einschließlich aller involvierter Software-Module nachvollziehbar wird. Im Falle eines Fehlverhaltens der Kommunikationseinrichtung in Folge der Rekonfiguration ist hierdurch vorteilhaft zentral nachvollziehbar, welche Konfiguration diesem Fehlverhalten zu Grunde lag.

Der Rekonfigurationsmanager ist vorteilhaft als eine eigenständige Einrichtung in dem Kommunikationssystem verwirklicht. Eine Veranlassung einer Rekonfiguration der Kommunikationseinrichtung kann dabei von Seiten einer zentralen Steuereinrichtung, beispielsweise eines Operations- und Wartungszentrums (OMC - Operation and Maintenance Center), erfolgen. So veranlasst das OMC beispielsweise ein Laden einer neuen Softwareversion auf alle Basisstationen bzw. Netzzugangspunkte des Systems oder eines bestimmten Teilbereiches des Systems, wobei das OMC diese Softwareversion selbst nicht vorhalten und verteilen muss, sondern die Rekonfigurationsprozeduren autonom durch den oder die Rekonfigurationsmanager gesteuert werden. Alternativ kann für den Fall, dass die Kommunikationseinrichtungen Endgeräte sind, auch von Seiten der Kommunikationseinrichtung selbst bzw. in Folge einer Nutzereingabe eine Rekonfiguration veranlasst werden, zu dessen Durchführung die Kommunikationseinrichtung auf den ihr zugeordneten Rekonfigurationsmanager zugreift.

Alternativ zu einer Ausgestaltung des Rekonfigurationsmanagers als eigenständige Einrichtung des Kommunikationssystems ist beispielsweise auch eine Implementierung des Rekonfigurationsmanagers in der Kommunikationseinrichtung selbst denkbar, also entsprechend einer der Umsetzung der Rekonfiguration vorgeschalteten Instanz zur Entscheidung über die Notwendigkeit und nachfolgenden Vorbereitung einer Rekonfiguration.

Gemäß einer vorteilhaften Ausgestaltung der Erfindung wird die neue Konfiguration in einer lokalen Datenbasis der Kommunikationseinrichtung und zusätzlich oder alternativ in einer zentralen Datenbasis des Kommunikationssystems gespeichert.

In einer solchen Datenbasis, lokal und/oder zentral, wird vorteilhaft eine Kommunikationseinrichtungs-spezifische Historie von Konfigurationen hinterlegt. Diese kann zusätzlich zu der gespeicherten neuen Konfiguration eine bestimmte Anzahl zuletzt verwendeter Konfigurationen umfassen, um im Falle eines Fehlverhaltens der Kommunikationseinrichtung beispielsweise auf eine stabile Konfiguration zurückgreifen zu können. Die Anzahl der gespeicherten Einträge sollte jedoch vorteilhaft beschränkt werden, um den erforderlichen Speicherbedarf zu begrenzen. Dies kann beispielsweise durch eine Definition einer bestimmten Anzahl zu speichernder zuletzt verwendeter Konfigurationen erfolgen. Gleichsam kann jeder Konfiguration auch ein bestimmter Gültigkeitszeitraum, beispielsweise eine bestimmte Anzahl Tage/Wochen/Monate/Jahre nach Aktivierung der Konfiguration, zugewiesen werden, nach dessen Ablauf die gespeicherte Konfiguration automatisch aus der Datenbasis gelöscht wird.

Die zentrale Datenbasis kann dabei innerhalb des Kommunikationssystems angeordnet werden, in einem Mobilfunksystem beispielsweise als Teil des so genannten Heimat-Registers HLR (Home Location Register), in welchem teilnehmerspezifische Daten zentral hinterlegt sind, für den beispielhaften Fall, dass die Kommunikationseinrichtung Teilnehmerendgeräte sind, oder als Teil der zentralen Verwaltung des Systems in einem OMC, für den beispielhaften Fall, dass die Kommunikationseinrichtungen Basisstationen bzw. Netzzugangseinrichtungen des Systems sind. Vorteilhaft kann in beiden beispielhaften Fällen der Betreiber des Systems auf Informationen über die Konfigurationen der seinem System zugehörigen Kommunikationseinrichtungen zentral zugreifen. Auch wird ihm so ermöglicht, bei einem Fehlverhalten einer Kommunikationseinrichtung aufgrund einer bestimmten Konfiguration, entsprechende Konfigurationen bei identischen oder ähnlichen Kommunikationseinrichtungen zu unterbinden bzw. bei bereits erfolgten fehlerbehafteten Rekonfigurationen nochmalige, nicht zu Fehlverhalten führende Rekonfigurationen der Kommunikationseinrichtungen zu veranlassen.

Alternativ oder ergänzend kann die zentrale Datenbasis auch außerhalb des Kommunikationssystems, beispielsweise am Ort des das zumindest eine Software-Modul bereitstellenden Herstellers bzw. Vertreibers von Software-Modulen, angeordnet sein. Dieser ist dann in der Lage, Konfigurationen unterschiedlichster Kommunikationseinrichtungen zu vergleichen und, entsprechend dem obigen Systembetreiber, fehlerhafte Konfigurationen zu identifizieren und entsprechend für andere potenziell gefährdete Kommunikationseinrichtungen zu unterbinden bzw. eine Rekonfiguration einleiten.

In der zentralen Datenbasis werden Identifizierungsinformationen der jeweiligen Konfiguration, d.h. beispielsweise des Software-Moduls, der Kommunikationseinrichtung, des die Konfiguration definierenden Rekonfigurationsmanagers und der Quelle des Software-Moduls, sowie ein Zeitpunkt der Aktivierung der Konfiguration durch die Kommunikationseinrichtung gespeichert. Diese Informationen ermöglichen im Falle eines Fehlverhaltens vorteilhaft eine genaue Nachvollziehbarkeit, durch welche der in der Rekonfiguration involvierten Komponenten bzw. Einrichtungen das Fehlverhalten verursacht wurde. Die Identitäten des Rekonfigurationsmanagers und/oder der Software-Modul-Quelle werden dabei beispielsweise mittels einer Angabe eines DNS-Namen (Domain Name Service), einer IP-Adresse oder einer URL (Uniform Resource Locator) hinterlegt.

Die Behandlung bzw. Speicherung von Konfigurationen erfolgt in der Registrierungseinrichtung nicht Kommunikationseinrichtungs-spezifisch, da hier nur eine allgemeine Prüfung der Konfiguration erfolgt, in der zentralen Datenbasis sollte sie entsprechend den vorstehenden Ausführungen jedoch spezifisch für die jeweilige Kommunikationseinrichtung gespeichert werden. In der Registrierungseinrichtung werden die Konfigurationsparameter jedoch beispielsweise in Form von Meta-Parametern hinterlegt, d.h. eine für eine bestimmte Kommunikationseinrichtung generierte Konfiguration wird auch für Kommunikationseinrichtungen der gleichen Baureihe oder typgleiche Kommunikationseinrichtungen als gültig anerkannt und entsprechend zertifiziert.

Gemäß einer weiteren vorteilhaften Ausgestaltung der Erfindung wird dem generierten Zertifikat eine zeitliche Gültigkeit zugeordnet, wobei auch diese Informationen in der lokalen und/oder zentralen Datenbasis gespeichert werden kann. Diese zeitliche Gültigkeit gibt dabei beispielsweise einen Zeitraum an, innerhalb dessen die Konfiguration von der Kommunikationseinrichtung aktiviert werden muss bzw. bis zu dessen Ende die zertifizierte Konfiguration von der Registrierungseinrichtung vorgehalten wird. Die Gültigkeit kann jedoch in gleicher Weise den Zeitraum für die Nutzung der Konfiguration im Sinne einer vorgegebenen Nutzungsperiode angeben, nach dessen Ablauf die Zertifizierung erneuert bzw. eine neue Konfiguration generiert und zertifiziert werden muss. Auch diese Gültigkeitsinformation kann vorteilhaft in der Registrierungseinrichtung sowie der lokalen und/oder zentralen Datenbasis hinterlegt werden.

Die Registrierungseinrichtung sollte alle oder Teile der vorstehend genannten Identifizierungsinformationen, vorteilhaft für den Zeitraum der Gültigkeit des Zertifikats, vorhalten oder auf diese direkt zugreifen können. In diesem Sinne kann es vorteilhaft sein, die zentrale Datenbasis als Teil der Registrierungseinrichtung bzw. mit dieser direkt verbunden zu verwirklichen, oder eine direkte Verknüpfung zwischen den Einträgen in der Registrierungseinrichtung und in der zentralen Datenbasis einzurichten. Dies erfolgt beispielsweise mittels direkter Verknüpfungen der jeweils gespeicherten Daten, sodass jeder Konfigurationseintrag in der zentralen Datenbasis auf ergänzende Informationen in der Registrierungsseinrichtung und umgekehrt zugreifen kann. Sinnvoll kann es dabei auch sein, wenn das von der Registrierungseinrichtung generierte Zertifikat selbst zumindest Teile der Identifizierungsinformationen enthält, sodass diese auch der das Zertifikat empfangenden Kommunikationseinrichtung zur Verfügung stehen und insbesondere der Kommunikationseinrichtung ermöglichen, eine Eignung der Konfiguration zu prüfen.

Eine erfindungsgemäße Kommunikationseinrichtung als Teil eines Kommunikationssystems sowie ein Kommunikationssystem weisen jeweils Einrichtungen bzw. Komponenten auf, die eine Verwirklichung des erfindungsgemäßen Verfahrens ermöglichen.

Die Erfindung wird nachfolgend anhand eines Ausführungsbeispiels näher dargestellt. Dabei zeigen
- FIG 1: ein Blockschaltbild eines Mobilkommunikationssystem mit Komponenten zur Verwirklichung des erfindungsgemäßen Verfahrens,
- FIG 2: ein Ablaufdiagramm einer Ausführungsform des erfindungsgemäßen Verfahrens, und
- FIG 3: ein Blockschaltbild einer Kommunikationseinrichtung.

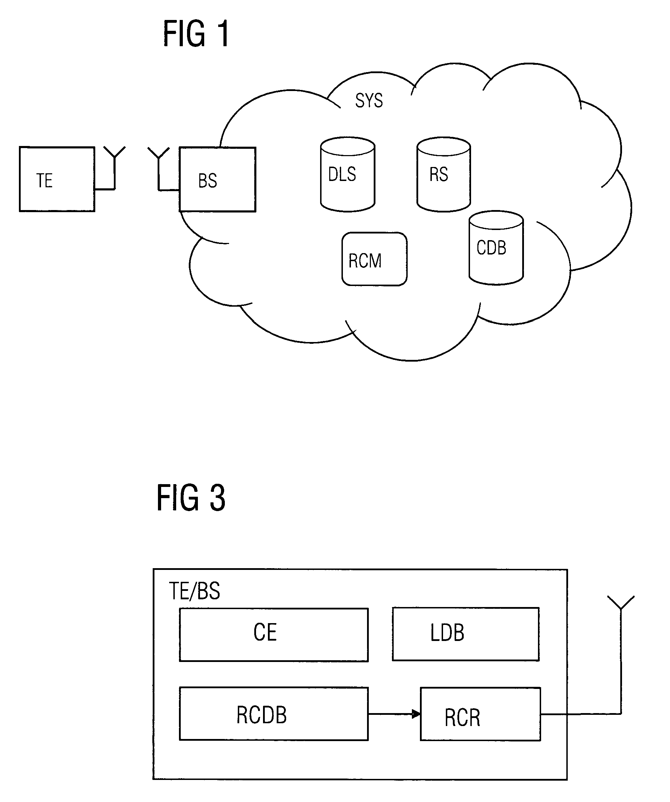

In der FIG 1 sind beispielhafte Komponenten eines Mobilfunksystems dargestellt, deren Funktionalitäten von dem erfindungsgemäßen Verfahren genutzt werden. Die Komponenten können jeweils als unabhängige physikalische Einrichtungen verwirklicht sein, jedoch ist auch eine Zusammenfassung von Funktionalitäten mehrerer dargestellter Komponenten in einer einzigen physikalischen Einrichtung entsprechend vorstehender Beschreibung bzw. Integration in allgemein bekannten Einrichtungen eines Mobilfunksystems denkbar und von der Erfindung mit umfasst. Denkbar ist ebenso, einzelne Komponenten außerhalb des Mobilfunksystems anzuordnen.

In der FIG 1 sind folgende Komponenten dargestellt. Zum einen ist auf beiden Seiten der Funkschnittstelle jeweils eine Funkstation TE bzw. BS vorgesehen. Es sei angenommen, dass beide im Sinne von so genannten Software Defined Radio mittels Software rekonfigurierbar sind. Jedoch ist es in gleicher Weise denkbar, dass nur eine der beiden Funkstationen rekonfigurierbar ist. Eine Basisstation BS bzw. ein Netzzugangspunkt stellt dabei die netzseitige Schnittstelle zu Endgeräten TE dar, wobei die Endgeräte TE beispielsweise als mobile oder stationäre Teilnehmer-Endgeräte bzw. Funkmodule ausgestaltet sind. Die Basisstation BS ist über weitere, nicht dargestellte Komponenten des Mobilfunksystems, wie der so genannten Basisstationssteuerung (BSC - Base Station Controller) und der Mobilvermittlungsstelle (MSC - Mobile Switching Center) mit öffentlichen Telefon- und Datennetzen verbunden. In gleicher Weise kann ein Netzzugangspunkt, beispielsweise ein so genannter Access Point, über einen oder mehrere systeminterne Gateways und Router mit einem zentralen Netz, beispielsweise dem Internet, verbunden sein.

Dem Mobilfunksystem SYS sind weiterhin ein so genannter Rekonfigurationsmanager RCM, ein Download-Server DLS, eine Registrierungseinrichtung RS sowie eine zentrale Datenbasis CDB zugeordnet, deren einzelne Funktionalitäten nachfolgend näher beschrieben werden.

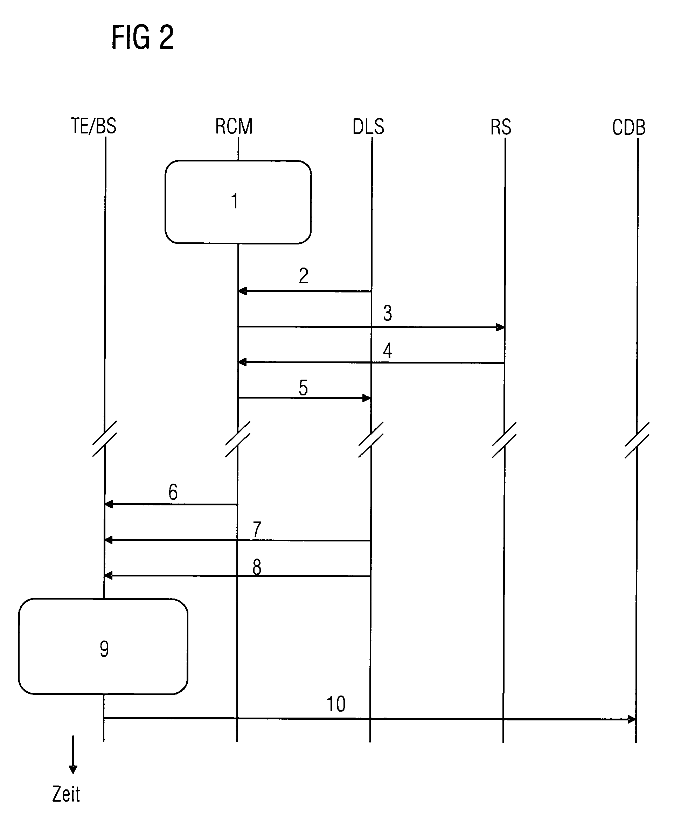

In der FIG 2 ist ein Ablauf- bzw. Signalisierungsdiagramm nach einer beispielhaften Ausführungsform des erfindungsgemäßen Verfahrens dargestellt. Es sei angenommen, dass in einem ersten Schritt 1 in dem Rekonfigurationsmanager eine neue Konfiguration für die rekonfigurierbare Kommunikationseinrichtung, sei es ein Endgerät TE oder eine Basisstation BS, definiert wird. Die Definition einer neuen Konfiguration kann dabei von der Kommunikationseinrichtung selbst, insbesondere durch Eingabe des Nutzers des Endgerätes, aber auch von einer zentralen Instanz des Mobilfunksystems, beispielsweise dem OMC, ausgelöst werden.

Ein für die Rekonfiguration der Kommunikationseinrichtung erforderliches Software-Modul bzw. mehrere Software-Module werden anschließend in einem zweiten Schritt 2 von einem Download-Server DLS zu dem Rekonfigurationsmanager herunter geladen. Der Download-Server DLS ist beispielsweise als ein im Mobilfunksystem angeordneter Server, welcher einen zentralen Zugriff auf vorgehaltene Software-Module ermöglicht, ausgestaltet. Er kann jedoch auch dem Hersteller der zu rekonfigurierenden Kommunikationseinrichtung bzw. Entwicklern oder Vertreibern von Software-Modulen zugeordnet sein. Somit muss der Rekonfigurationsmanager RCM gegebenenfalls auf mehrere Download-Server zugreifen, um unterschiedlichste für die Rekonfiguration benötigte Software-Module herunter zu laden.

In einem dritten Schritt 3 überträgt der Rekonfigurationsmanager RCM das zumindest eine Software-Modul sowie eine Beschreibung der neuen Konfiguration zu einer zentralen Registrierungseinrichtung RS bzw. Registrierungsserver. Diese Registrierungseinrichtung RS speichert das zumindest eine Software-Modul sowie die Beschreibung der Konfiguration, und stellt ein so genanntes Hinterlegungs-Zertifikat aus, welches es in einem vierten Schritt 4 zu dem Rekonfigurationsmanager RCM überträgt. Das Zertifikat legt der Rekonfigurationsmanager RCM anschließend in einem fünften Schritt 5 auf dem Download-Server DLS ab.

Wenn nun zu einem späteren Zeitpunkt der Rekonfigurationsmanager RCM entscheidet, die neue Konfiguration auf der Kommunikationseinrichtung TE bzw. BS zu aktivieren, sendet er in einem sechsten Schritt 6 eine Aktivierungsnachricht zu der Kommunikationseinrichtung. Diese Aktivierungsnachricht kann beispielsweise Informationen über die neue Konfiguration sowie die hierfür benötigten Software-Module beinhalten. Daraufhin lädt das Kommunikationseinrichtung in einem siebten 7 und achten Schritt 8 das für die Rekonfiguration erforderliche zumindest eine Software-Modul sowie das ausgestellte Hinterlegungs-Zertifikat von dem Download-Server DLS herunter.

Anschließend erfolgt in einem neunten Schritt 9 in der Kommunikationseinrichtung eine Prüfung der neuen Konfiguration sowie des ausgestellten Zertifikats. Sofern diese Überprüfungen zu einem positiven Ergebnis führt, aktiviert die Kommunikationseinrichtung die neue Konfiguration. Im Rahmen der Aktivierung der neuen Konfiguration kann diese in einer Datenbasis in der Kommunikationseinrichtung gespeichert werden. Vorteilhaft sind in dieser Datenbasis auch vorherige Konfigurationen gespeichert, sodass für den Fall eines Fehlverhaltens der Kommunikationseinrichtung aufgrund der neuen Konfiguration eine ältere Konfiguration wieder hergestellt werden kann.

Ergänzend oder alternativ zu der Speicherung der neuen Konfiguration und dem Führen einer Historie vorheriger Konfigurationen in der Kommunikationseinrichtung selbst wird in einem zehnten Schritt 10 die Konfiguration in einer zentralen Datenbasis CDB des Mobilfunksystems SYS gespeichert. Mittels einer zentralen Speicherung von Konfigurationen ist es vorteilhaft möglich, zentral auf die dort vorgehaltenen Daten zuzugreifen, auch wenn beispielsweise die lokale Datenbasis in der Kommunikationseinrichtung nicht mehr auslesbar ist. Alternativ zu einer in Schritt 10 dargestellten Übertragung der neuen Konfiguration von der Kommunikationseinrichtung TE/BS zu der zentralen Datenbasis CDB ist ebenso eine Übertragung der neuen Konfiguration zu der zentralen Datenbasis ausgehend von dem Rekonfigurationsmanager RCM denkbar.

Zahlreiche Varianten des beschriebenen Verfahrens sind denkbar. So ist es denkbar, dass die Registrierungseinrichtung selbst das zumindest eine zu zertifizierende Software-Modul von dem Download-Server herunter lädt, nachdem der Rekonfigurationmanager in den Informationen zu der neuen Konfiguration auch Angaben über das betroffene Software-Modul einschließlich der Adresse, unter der es verfügbar ist, zu der Registrierungseinrichtung übermittelt. Weiterhin ist es denkbar, dass das ausgestellte Zertifikat nicht auf dem Download-Server hinterlegt wird, sondern der Rekonfigurationsmanager selbst es vorhält, sodass dieser es zusammen mit der Aktivierungsnachricht zu der Kommunikationseinrichtung übertragen kann, bzw. die Kommunikationseinrichtung es sich direkt von dem Rekonfigurationsmanager herunterladen kann.

Zudem ist denkbar, die Rekonfiguration der Kommunikationseinrichtung in eine so genannte Vorbereitungsphase und eine Aktivierungsphase zu unterteilen. Im Rahmen der Vorbereitungsphase wird das zumindest eine Software-Modul sowie das Zertifikat zu der Kommunikationseinrichtung übertragen und in dieser geprüft. Anschließend, beispielsweise in Folge einer Signalisierung der Kommunikationseinrichtung zu dem Rekonfigurationsmanager, dass die neue Konfiguration aktivierbar ist, sendet der Rekonfigurationsmanager eine Aktivierungsnachricht zu der Kommunikationseinrichtung, welche zur unmittelbaren Aktivierung der neuen Konfiguration in der Kommunikationseinrichtung führt.

Weiterhin sind gemäß obiger Beschreibung verschiedenste Realisierungen bezüglich der Speicherung von relevanten Informationen denkbar, beispielsweise, welche Informationen in welcher Komponente bzw. Einrichtung gespeichert werden sollte, um einen möglichst optimalen Zugriff auf diese Informationen zu gewährleisten.

In der FIG 3 ist schließlich beispielhaft ein Blockschaltbild einer Kommunikationseinrichtung, sei es ein Endgerät TE oder eine Basisstation BS, dargestellt, wobei lediglich zur Realisierung einer Rekonfiguration erforderliche Komponenten dargestellt sind. Die beispielhafte Kommunikationseinrichtung weist eine Steuereinrichtung CE, einen Speicher RCDB zum temporären Speichern von Konfigurationen und Software-Modulen, eine per Software-Modul rekonfigurierbare Sende-/Empfangseinrichtung RCR im Sinne eines Software Defined Radio, sowie eine lokale Datenbasis LDB zum Speichern von aktuellen und vorherigen Konfigurationen auf.

Eine über die Sende-/Empfangseinrichtung RCR empfangene neue Konfiguration, ein oder mehrere Software-Module sowie ein Zertifikat werden zunächst in dem Speicher RCDB zwischengespeichert. Anschließend erfolgt nach Empfang einer Aktivierungsnachricht eine Prüfung der Konfiguration und des Zertifikats in der Steuereinrichtung CE. Ist das Ergebnis dieser Prüfung positiv, d.h. die neue Konfiguration kann aktiviert werden, wird das in dem Zwischenspeicher RCDB hinterlegte Software-Modul durch die Steuereinrichtung CE in der rekonfigurierbaren Sende-/Empfangseinrichtung RCR installiert bzw. diese nach der neuen Konfiguration eingerichtet und betrieben. Informationen bezüglich der aktuellen Konfiguration werden anschließend in der lokalen Datenbasis LDB hinterlegt, sodass sie, beispielsweise für den Fall einer fehlerbehafteten Neukonfiguration, ausgelesen werden können und/oder auf eine vorherige, fehlerfreie Konfiguration zurückgegriffen werden kann.

Nachfolgend wird ein Beispiel für die verschiedenen Parameter bzw. Informationen einer Konfiguration angegeben. Ziel ist eine Rekonfiguration der Sende-/Empfangseinrichtung zur Verarbeitung von Video-Signalen in einem WLAN-basierten System, welches in einem Frequenzband zwischen 440 und 450 MHz arbeitet.

ConfigId: Op-Use450forVideo-V1.1
Contact: sdr@futureoperator.com
SDRSoftware: http://www.sdrsawy.com/openradio/WLAN-QoSVideo-Europe.sdr
Digest: 2e12c27f07f5a9cbc65d829d5f0f9794eb47d546 FrequencyBandLow: 440 MHz
FrequencyBandHigh: 450 MHz
ChannelSpace: 25 kHz
MaxTXPower: 100 mW EIRP

Diese Konfiguration verwendet ein so genanntes SDR-Software-Modul, welches über die angegebene Adresse (SDRSoftware) von dem Download-Server herunterladbar ist. Enthalten ist ebenfalls ein so genannter Digest, beispielsweise ein SHA-1 Hash-Wert der SDR-Software, um die SDR-Software eindeutig identifizieren zu können. Weiterhin werden Parameter definiert für den zu verwendende Frequenzbereich (440-450 MHz), den Kanalabstand (25 kHz) und die maximale Ausgangsleistung der Sendeinrichtung. Die Konfiguration enthält außerdem eine Identifizierungsinformation (ConfigId) sowie eine Kontaktinformation (Contact).

Die Hinterlegung dieser Konfiguration auf der Registrierungseinrichtung wird durch ein Hinterlegungszertifikat bestätigt, wie es nachfolgend beispielhaft angegeben ist.

MIME-Version: 1.0
Content-Type: multipart/signed; protocol="application/x-pkcs7-signature"; micalg=sha1; boundary="----
E0EF130A315B8024A2C781618F2E9E6C"

This is an S/MIME signed message

------E0EF130A315B8024A2C781618F2E9E6C
ConfigId: Op-Use450forVideo-V1.1
Digest: a37253589cf5c3865143c2fc00c8c2b8540c8c62
SDR-Registry: http://www.sdr-registry.com/3ad92a0721fac53a
Contact: sdr@futureoperator.com
ValidNotBefore: Nov 4 15:10:00 2004 GMT
ValidNotAfter: Dec 4 15:10:00 2004 GMT

-----E0EF130A315B8024A2C781618F2E9E6C
Content-Type: application/x-pkcs7-signature; name="smime.p7s" Content-Transfer-Encoding: base64
Content-Disposition: attachment; filename="smime.p7s"

MIIF3gYJKoZIhvcNAQcCoIIFzzCCBcsCAQExCzAJBgUrDgMCGgUAMAsGCSqGS Ib3...
- - - - - -E0EF130A315B8024A2C781618F2E9E6C-

Es handelt sich hierbei um ein verschlüsseltes Dokument, welches aus dem Inhalt der Hinterlegung, beispielsweise ConfigId, Digest (hier der SHA-1 Hash-Wert der Konfiguration), und einer Gültigkeitsangabe der Hinterlegungsbestätigung (ValidNotBefore, ValidNotAfter) besteht. Weiterhin enthält sie Kontaktinformation desjenigen, der die Konfiguration hinterlegt hat (Contact) sowie Information, um weitere hinterlegte Daten bei der Registrierungseinrichtung abfragen zu können (SDR-Registry: http://www.sdr-registry.com/3ad92a0721fac53a), hier in Form einer URL. Diese Informationen sind durch eine digitale Signatur der Registrierungseinrichtung geschützt (hier eine PKCS#7 Signatur).

Diese Informationen oder Teile davon werden beispielsweise, wie vorangehend beschrieben, in den Komponenten bzw. in lokalen und/oder zentralen Datenbasen abgelegt, sodass ein gesicherter Zugriff hierauf möglich ist.

## Patentansprüche

1. Verfahren zum Rekonfigurieren einer Kommunikationseinrichtung (TE,BS) eines Kommunikationssystems, bei dem von einem der Kommunikationseinrichtung (TE,BS) zugeordneten Rekonfigurationsmanager (RCM) eine neue Konfiguration der Kommunikationseinrichtung (TE,BS) definiert wird, wobei für die neue Konfiguration zumindest ein Software-Modul verwendet wird,
von einer Registrierungseinrichtung (RS) ein Zertifikat für die definierte neue Konfiguration generiert wird, und
nach einer Prüfung des Zertifikats die Kommunikationseinrichtung mittels des zumindest einen Software-Moduls rekonfiguriert wird.

2. Verfahren nach Anspruch 1, bei dem
die neue Konfiguration in einer Datenbasis (LDB) in der Kommunikationseinrichtung (TE,BS) und/oder in einer zentralen Datenbasis (CDB) innerhalb oder außerhalb des Kommunikationssystems gespeichert wird.

3. Verfahren nach Anspruch 2, wobei
Speicherung die neue Konfiguration im Anschluss an eine Aktivierung der neuen Konfiguration in der Kommunikationseinrichtung (TE,BS) gespeichert wird.

4. Verfahren nach einem vorhergehenden Anspruch, wobei
dem Zertifikat eine zeitliche Gültigkeit der Konfiguration zugeordnet wird.

5. Kommunikationseinrichtung eines Kommunikationssystems, aufweisend
Mittel (RCR) zum Empfangen von zumindest einem Software-Modul für eine Rekonfiguration sowie zum Empfangen eines Zertifikats,
Mittel (CE) zum Prüfen des empfangenen Zertifikats, und Mittel (CE) zum Steuern einer Rekonfiguration mittels des empfangenen zumindest einen Software-Moduls.

6. Kommunikationseinrichtung nach Anspruch 5, weiterhin aufweisend
eine Datenbasis (LDB) zum Speichern der Konfiguration.

7. Kommunikationseinrichtung nach Anspruch 5 oder 6, wobei die Mittel (RCR) zum Empfangen mittels des zumindest einen Software-Moduls rekonfiguriert werden.

8. Kommunikationseinrichtung nach einem der Ansprüche 5 bis 7, welche
als ein Endgerät (TE) oder eine Basisstation (BS) ausgestaltet ist.

9. Kommunikationssystem, aufweisend zumindest
eine mittels zumindest einem Software-Modul rekonfigurierbare Kommunikationseinrichtung (TE,BS),
einen der Kommunikationseinrichtung (TE,BS) zugeordneten Rekonfigurationsmanager (RCM) zum Definieren einer neuen Konfiguration für die Kommunikationseinrichtung (TE,BS), und
eine Registrierungseinrichtung (RS) zum Generieren eines Zertifikat für die definierte neue Konfiguration.

10. Kommunikationssystem nach Anspruch 9, weiterhin aufweisend
einen Download-Server (DLS) zum Bereitstellen des zumindest einen Software-Moduls für die neue Konfiguration, und/oder eine zentrale Datenbasis (CDB) zum Speichern der neuen und/oder vorherige Konfigurationen.
